(19) Europäisches Patentamt / European Patent Office / Office européen des brevets

(11) **EP 3 228 540 B1**

(12) **FASCICULE DE BREVET EUROPEEN**

(45) Date de publication et mention de la délivrance du brevet:
**09.01.2019 Bulletin 2019/02**

(51) Int Cl.:
***B64C 25/40*** *(2006.01)*

(21) Numéro de dépôt: **17165114.4**

(22) Date de dépôt: **05.04.2017**

(54) **PROCÉDÉ DE COMMANDE D'UN SYSTÈME DE TAXIAGE**

STEUERVERFAHREN EINES ROLLSYSTEMS

METHOD FOR CONTROLLING A TAXIING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2016 FR 1653058**

(43) Date de publication de la demande:
**11.10.2017 Bulletin 2017/41**

(73) Titulaire: **Safran Landing Systems**
**78140 Vélizy-Villacoublay (FR)**

(72) Inventeurs:
• **GORCE, Clément**
**78140 VELIZY-VILLACOUBLAY (FR)**
• **MARQUES, Frédéric**
**78140 VELIZY-VILLACOUBLAY (FR)**

(74) Mandataire: **Lavaud, Thomas**
**Cabinet Boettcher**
**16, rue Médéric**
**75017 Paris (FR)**

(56) Documents cités:
**EP-A1- 2 886 454      WO-A1-2014/076485**
**US-A1- 2012 018 574   US-A1- 2015 158 579**
**US-A1- 2015 210 383   US-A1- 2015 225 075**
**US-A1- 2015 253 773**

**Description**

L'invention concerne le domaine du taxiage ou roulage des aéronefs.

ARRIERE PLAN DE L'INVENTION

Un système de taxiage installé sur un aéronef permet de déplacer l'aéronef durant les phases de taxiage de manière autonome, c'est-à-dire en évitant l'usage des moteurs principaux de l'aéronef.

Dans un système de taxiage électrique, des roues portées par un ou plusieurs atterrisseurs sont entraînées en rotation, durant les phases de taxiage, par des actionneurs comportant des moteurs électriques.

Lors des phases de taxiage d'un aéronef utilisant un tel système de taxiage, l'aéronef est donc mu par le ou les atterrisseurs portant les roues entraînées en rotation par le système de taxiage. Les atterrisseurs subissent donc des efforts en sens opposé aux efforts subis normalement lorsque c'est l'aéronef qui, grâce aux moteurs principaux, tracte les atterrisseurs.

Les efforts subis par les atterrisseurs lors des phases de taxiage génèrent des contraintes mécaniques (par exemple, des sollicitations en flexion ou en torsion), mais aussi des contraintes thermiques, sur des pièces mécaniques du système de taxiage et, plus généralement, sur des pièces mécaniques des atterrisseurs. Les tiges montées à coulissement dans les caissons des atterrisseurs sont ainsi particulièrement touchées par les effets de ces contraintes mécaniques et thermiques.

Du fait de ces contraintes mécaniques et thermiques, les pièces mécaniques du système de taxiage et des atterrisseurs subissent une fatigue qui réduit la durée de vie desdites pièces mécaniques.

Des exemples de l'art antérieur sont fournis par les documents EP2886454, US2012018574, US2015158579, WO2014076485, US2015253773, US2015210383 et US2015225075.

OBJET DE L'INVENTION

Un but de l'invention est d'augmenter la durée de vie des pièces mécaniques d'un système de taxiage d'aéronef et des atterrisseurs de l'aéronef.

RESUME DE L'INVENTION

A cet effet, on prévoit, selon l'invention, un procédé de commande d'un système de taxiage adapté à déplacer un aéronef au cours du taxiage de l'aéronef, comprenant les étapes de :

- générer une commande d'effort nominale ;
- générer une consigne d'accélération ;
- mettre en oeuvre, parallèlement à la génération de la commande d'effort nominale, une chaîne de traitement destinée à définir un seuil d'effort maximum et comprenant une boucle de régulation, la boucle de régulation ayant pour consigne la consigne d'accélération et pour commande une commande d'accélération, la commande d'accélération étant convertie en un effort d'accélération permettant d'obtenir une accélération de l'aéronef au cours du taxiage égale à la commande d'accélération, le seuil d'effort maximum étant égal au maximum entre l'effort d'accélération et un seuil d'effort minimum ;
- générer une commande d'effort optimisée égale au minimum entre la commande d'effort nominale et le seuil d'effort maximum.

La commande d'effort optimisée permet de limiter les contraintes appliquées sur des pièces mécaniques du système de taxiage et d'atterrisseurs de l'aéronef portant des roues utilisées pour le taxiage, et donc d'augmenter la durée de vie de ces pièces mécaniques.

D'autres caractéristiques et avantages de l'invention ressortiront à la lecture de la description qui suit de modes de réalisation particuliers non limitatifs de l'invention.

BREVE DESCRIPTION DES DESSINS

Il sera fait référence aux dessins annexés, parmi lesquels :

- la figure 1 représente un atterrisseur d'un aéronef portant des roues utilisées pour le taxiage de l'aéronef ;
- la figure 2 comporte un graphique sur lequel sont représentées des courbes de commandes d'effort effectives ;
- la figure 3 représente un procédé de taxiage d'un aéronef selon un premier mode de réalisation de l'invention ;

- la figure 4 comporte un graphique sur lequel sont représentées une courbe d'un effort d'accélération, une courbe d'un seuil d'effort minimum et une courbe d'un seuil d'effort maximum ;
- la figure 5 comporte un graphique sur lequel sont représentées une courbe d'une commande d'effort nominale, une courbe d'une commande d'effort optimisée et une courbe d'un seuil d'effort maximum ;
- la figure 6 comporte un premier graphique sur lequel sont représentées une courbe d'une consigne d'accélération et une courbe d'une accélération estimée, et un deuxième graphique sur lequel sont représentées une courbe d'une commande d'effort nominale et une courbe d'une commande d'effort effective ;
- la figure 7 représente un procédé de taxiage d'un aéronef selon un deuxième mode de réalisation de l'invention.

## DESCRIPTION DETAILLEE DE L'INVENTION

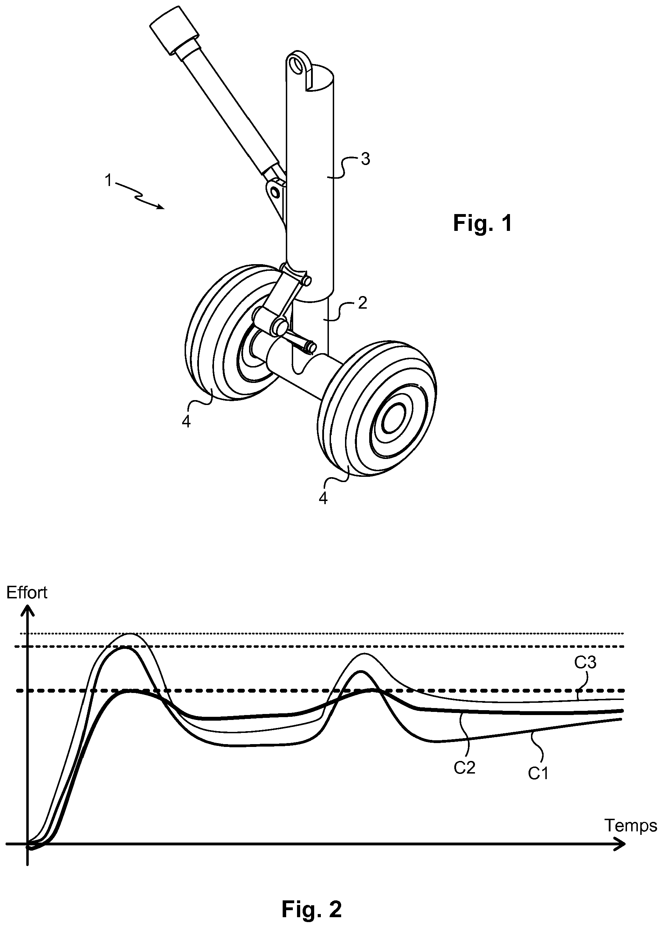

En référence à la figure 1, le procédé de commande d'un système de taxiage selon un premier mode de réalisation de l'invention est ici mis en oeuvre sur un aéronef comportant un atterrisseur 1.

L'atterrisseur 1 comporte une tige 2 montée à coulissement dans un caisson 3 de l'atterrisseur 1 et portant deux roues 4.

Le système de taxiage agit sur les roues 4 de l'atterrisseur 1 pour déplacer l'aéronef de manière autonome au cours du taxiage de l'aéronef.

Le système de taxiage comporte ici un actionneur comprenant un moteur électrique, un module électrique de puissance (aussi appelé calculateur, contrôleur, électronique de puissance, etc.) et un module électrique de commande (aussi appelé calculateur, contrôleur, électronique de commande, etc.). Le module électrique de puissance et le module électrique de commande peuvent bien sûr être intégrés au sein d'une même unité électrique.

Le pilote de l'aéronef génère un ordre de taxiage pour déplacer l'aéronef (dans une certaine direction, un certain sens, avec une certaine vitesse, une certaine accélération, etc.) . Le module électrique de commande génère à partir de l'ordre de taxiage une commande d'effort (par exemple, une commande de couple ou de vitesse ou de force) à destination du module électrique de puissance. Le module électrique de puissance génère à partir de la commande d'effort un courant électrique de commande et le transmet au moteur électrique.

Le procédé de commande d'un système de taxiage selon le premier mode de réalisation est ici mis en oeuvre dans le module électrique de commande et vise à générer une commande d'effort effective réduite permettant de réduire les efforts appliqués sur les pièces mécaniques de l'atterrisseur 1 et du système de taxiage au cours du taxiage de l'aéronef.

En référence à la figure 2, le procédé de commande d'un système de taxiage selon le premier mode de réalisation vise donc à obtenir une commande d'effort effective typiquement proche des courbes C1 et C2 (selon le compromis choisi entre contraintes mécaniques et contraintes thermiques), alors qu'un procédé de commande de l'art antérieur produit une commande d'effort effective typiquement proche de la courbe C3.

La commande d'effort effective est générée par le procédé de commande à partir de signaux d'entrée produits à partir de l'ordre de taxiage généré par le pilote de l'aéronef et à partir d'une consigne d'accélération produite dans le module électrique de commande.

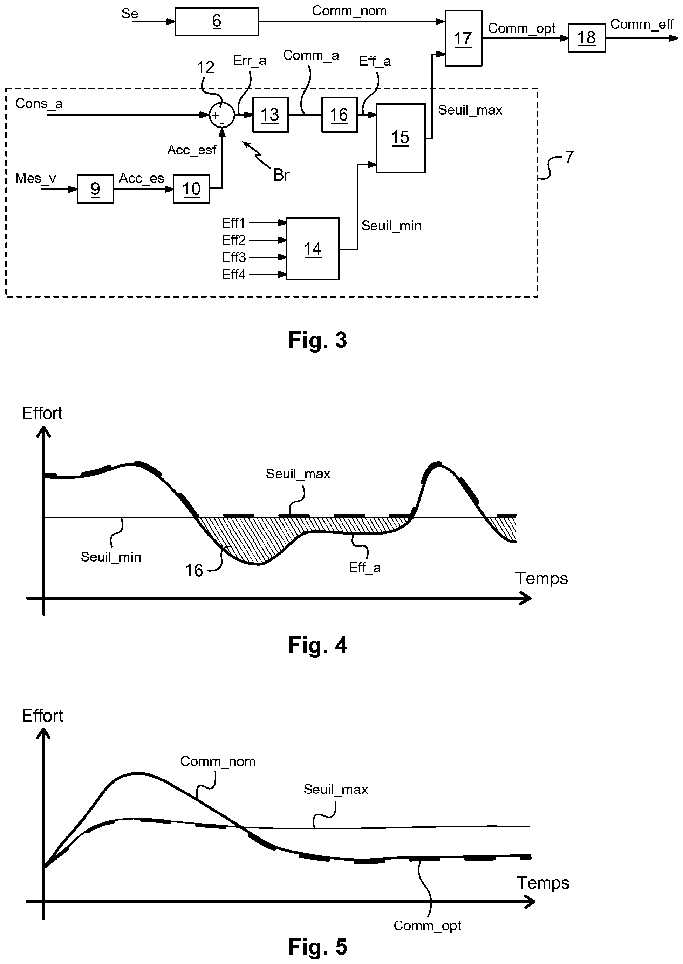

En référence à la figure 3, le procédé de commande comporte tout d'abord la mise en oeuvre d'un bloc de commande d'effort nominale 6. Le bloc de commande d'effort nominale 6 reçoit les signaux d'entrée Se. Le bloc de commande d'effort nominale 6 génère une commande d'effort nominale Comm_nom en fonction des signaux d'entrée Se. La commande d'effort nominale Comm_nom est destinée à piloter le moteur électrique de l'actionneur du système de taxiage.

La commande d'effort nominale Comm_nom générée par le bloc de commande d'effort nominale 6 est une commande d'effort classique, telle que générée par un procédé de commande d'un système de taxiage de l'art antérieur. Le bloc de commande d'effort nominale 6 n'est donc pas décrit ici plus en détail.

Le procédé de commande comporte de plus la mise en oeuvre d'une chaîne de traitement 7 parallèlement à la mise en oeuvre du bloc de commande d'effort nominale 6.

La chaîne de traitement 7 comporte une boucle de régulation Br destinée à réguler l'accélération de l'aéronef.

La boucle de régulation Br a pour consigne la consigne d'accélération Cons_a évoquée plus tôt. La consigne d'accélération Cons_a est ici une constante prédéterminée égale à $0,4 m/s^2$. La valeur de la consigne d'accélération Cons_a est une valeur qui permet de limiter les contraintes exercées sur les différentes pièces mécaniques de l'atterrisseur 1 et du système de taxiage. On note qu'il serait parfaitement possible d'utiliser une constante d'accélération Cons_a dont la valeur serait définie en temps réel en fonction de diverses mesures ou estimations pour optimiser la limitation des contraintes.

La chaîne de traitement 7 reçoit par ailleurs des mesures de vitesse Mes_v de l'aéronef au cours du taxiage de l'aéronef et réalisées par un ou des capteurs de vitesse de l'aéronef.

Les mesures de vitesse Mes_v de l'aéronef sont utilisées par la boucle de régulation Br pour réguler l'accélération de l'aéronef. La boucle de régulation Br comporte un bloc de dérivation 9 qui reçoit les mesures de vitesse Mes_v et transforme les mesures de vitesse Mes_v en une accélération estimée Acc_es de l'aéronef au cours du taxiage de l'aéronef. Le bloc de dérivation 9 met en oeuvre un algorithme de différentiation des mesures de vitesse Mes_v. Cet algorithme de différentiation vise à minimiser les bruits de calcul résultant d'imprécisions dans les modèles utilisés dans la chaîne de traitement 7, et améliore ainsi les performances de la chaîne de traitement 7.

La boucle de régulation Br comporte de plus un bloc de traitement et de filtrage 10, en sortie du bloc de dérivation 9, qui permet de filtrer l'accélération estimée Acc_es en sortie du bloc de dérivation 9 pour réduire le bruit présent dans l'accélération estimée Acc_es (ou, plus exactement, dans le signal représentatif de l'accélération estimée Acc_es). Ce bruit résulte de l'influence, lors de la mise en oeuvre de l'algorithme de différentiation, de l'échantillonnage et de la résolution des mesures de vitesse Mes_v, de perturbations mécaniques ou électriques, d'imprécisions de mesure, etc. Le bloc de traitement et de filtrage 10 produit une accélération estimée filtrée Acc_esf.

La boucle de régulation Br comporte de plus un soustracteur 12, qui retranche à la consigne d'accélération Cons_a l'accélération estimée filtrée Acc_esf. Le soustracteur 12 produit ainsi une erreur d'accélération Err_a de la boucle de régulation Br, qui est égale à la différence entre la consigne d'accélération Cons_a et l'accélération estimée filtrée Acc_esf.

La boucle de régulation Br comporte de plus un régulateur de type proportionnel, intégral, dérivé 13 (communément appelé régulateur PID). Le régulateur PID 13 génère une commande d'accélération Comm_a à partir de l'erreur d'accélération Err_a.

Le régulateur PID 13 a ici pour fonction de transfert :

$$PID(p) = Kp*(1+1/(Ti*p)+Td*p/(1+(td/N)*p)).$$

Le régulateur PID 13 met en oeuvre une fonction d'anti-emballement (fonction communément désignée par le terme anglais « anti wind-up »).

La commande d'accélération Comm_a en sortie de la boucle de régulation Br est convertie par un bloc de conversion 16 en un effort d'accélération Eff_a permettant d'obtenir une accélération de l'aéronef au cours du taxiage égale à la commande d'accélération (Comm_a).

On note que la valeur de dépassement (valeur communément désignée par le terme anglais « overshoot ») de la commande d'accélération Comm_a par rapport à la consigne d'accélération Cons_a est ici un paramètre critique pour concevoir la boucle de régulation Br (et donc le régulateur PID 13). En assurant que l'overshoot ne dépasse pas un certain seuil, on évite d'appliquer un pic d'effort d'accélération Eff_a sur l'atterrisseur 1, alors qu'un tel pic d'effort d'accélération Eff_a n'est pas nécessaire aux bonnes performances du taxiage (cf. figure 2 courbe C2).

L'erreur statique de la boucle de régulation Br, quant à elle, peut être compensée par une modification de la consigne d'accélération Cons_a, et ne constitue donc pas un paramètre critique pour concevoir la boucle de régulation Br (et donc le régulateur PID 13).

La commande d'accélération Comm_a doit être la plus basse possible pour réduire autant que possible l'effort d'accélération Eff_a. Plus la commande d'accélération Comm_a est basse, plus l'effort d'accélération Eff_a est réduit, et plus l'augmentation de la durée de vie de l'atterrisseur 1 est importante. Il convient cependant bien sûr de ne pas réduire de manière significative les performances du taxiage.

La chaîne de traitement 7 comporte de plus un bloc de calcul d'effort minimum 14.

Le bloc de calcul d'effort minimum 14 est utilisé pour calculer un seuil d'effort minimum Seuil_min, qui correspond à un effort nécessaire pour mettre en mouvement l'aéronef (si celui-ci est à l'arrêt) ou pour maintenir la vitesse de l'aéronef (si celui-ci est en roulage).

Le seuil d'effort minimum Seuil_min correspond donc à l'effort minimum qu'il convient de maintenir sur l'atterrisseur de l'aéronef pour ne pas pénaliser de manière significative les performances du taxiage si cela n'est pas nécessaire au vu des contraintes et des niveaux de fatigue subis par l'atterrisseur 1.

Le seuil d'effort minimum Seuil_min est calculé en temps réel (c'est-à-dire grâce à des mesures ou à des estimations réalisées en temps réel) à partir de la somme de premiers efforts résistants Eff1, de deuxièmes efforts résistants Eff2, de troisièmes efforts résistants Eff3 et de quatrièmes efforts résistants Eff4 qui s'appliquent à l'aéronef. On note ici que seuls certains efforts parmi les premiers efforts résistants Eff1, les deuxièmes efforts résistants Eff2, les troisièmes efforts résistants Eff3 et les quatrièmes efforts résistants Eff4 pourraient être pris en compte pour mettre en oeuvre le procédé de commande de l'invention. Les paragraphes suivants donnent un exemple de calcul de chacun de ces efforts.

Les premiers efforts résistants Eff1 sont dus à la gravité. Les premiers efforts résistants Eff1 sont déterminés en fonction d'au moins un des paramètres suivants : masse de l'aéronef, pente locale ou globale d'une piste sur laquelle roule l'aéronef, au moins une caractéristique géométrique de l'aéronef.

Les premiers efforts résistants Eff1 peuvent être calculés grâce à la formule suivante :

$$Eff1 = Fgravité\ globale = M*g*sin(\theta pg),$$

où M est la masse de l'aéronef, g est l'accélération de la pesanteur, θpg est la pente globale.

Ainsi, en utilisant les valeurs numériques suivantes :

M = 80000kg ;
g = 9.81m/s$^2$ ;
θpg = 1° ;

on obtient :

$$Eff1 = Fgravité\ globale \approx 80000*9.81*sin(1) \approx 13697N.$$

Les premiers efforts résistants Eff1 peuvent alternativement être calculés grâce à la formule suivante : Eff1 = Fgravité locale = Ch*sin(θpl),
où θpl est la pente locale et où Ch est une charge calculée en fonction de la masse de l'aéronef et de caractéristiques géométriques de l'aéronef, parmi lesquelles le nombre d'atterrisseurs de l'aéronef ainsi que la distance et l'orientation de chaque atterrisseur par rapport au centre de gravité de l'aéronef.

Les deuxièmes efforts résistants Eff2 sont dus à des effets aérodynamiques.

Les deuxièmes efforts résistants Eff2 sont déterminés en fonction d'au moins un des paramètres suivants : vitesse de l'aéronef, surface active de trainée, coefficient de trainée, coefficient de portance de l'aéronef (dans toutes les directions), vitesse de l'air environnant, densité de l'air environnant.

Les deuxièmes efforts résistants Eff2 peuvent être calculés grâce à la formule suivante :

$$Eff2 = Faéro = 0.5*\rho*S*Ct*(Vaéronef + Vair)^2,$$

où ρ est la densité de l'air environnant, S est la surface active de trainée, Ct est le coefficient de trainée, Vaéronef est la vitesse de l'aéronef et Vair est la vitesse de l'air environnant.

Ainsi, en utilisant les valeurs numériques suivantes :

ρ = 1.204kg/m$^3$ ;
S = 100m$^2$ ;
C = 0.007 ;
Vaéronef = 10kts (soit 5.144m/s) ;
Vair air = 0m/s (air stable) ;

on obtient :

$$Eff2 = Faéro = 112N.$$

Les troisièmes efforts résistants Eff3 sont dus à des pneumatiques de l'aéronef et à une liaison au sol entre les pneumatiques de l'aéronef et la piste sur laquelle roule l'aéronef au cours du taxiage de l'aéronef.

Les troisièmes efforts résistants Eff3 sont déterminés en fonction d'au moins un des paramètres suivants : au moins une caractéristique des pneumatiques de l'aéronef, charge vue par chaque pneumatique, durée de stationnement de l'aéronef (si l'aéronef est à l'arrêt), au moins une caractéristique du sol de la piste.

Les caractéristiques des pneumatiques comportent ici le nombre de pneumatiques, le type des pneumatiques, la pression de gonflage des pneumatiques, la température des pneumatiques, l'orientation des pneumatiques par rapport aux atterrisseurs qui portent les roues munies desdits pneumatiques.

Les caractéristiques du sol de la piste comportent ici des caractéristiques mécaniques, des caractéristiques d'indentation, la température du sol, le type de sol (béton, bitumeux, etc.).

Les troisièmes efforts résistants Eff3 peuvent être calculés, lorsque l'aéronef se déplace, en utilisant la formule suivante :

$$Eff3 = Fpneu = Froulement = M*g*Cr,$$

où Cr est le coefficient de résistance au roulement qui est calculé en fonction des paramètres listés ci-dessus.

Ainsi, avec :

M = 80000kg ;
g = 9.81m/s$^2$ ;
Cr = 0.001 ;

on obtient :

$$Eff3 = Froulement = Fpneu = 7848N.$$

Les troisièmes efforts résistants Eff3 peuvent être calculés, lorsque l'aéronef est à l'arrêt, en utilisant la formule suivante :

$$Eff3 = Fpneu = M*g*(A-B*exp^{D/C}),$$

où A, B, C sont des coefficients calculés en fonction des paramètres listés ci-dessus et où D est la durée de stationnement de l'aéronef.

Ainsi, avec :

M = 80000kg ;
g = 9.81m/s$^2$ ;
D = 120 minutes ;
A = 0.05 ;
B= 0.0025,
C = 60 ;

on obtient :

$$Eff3 = Fpneu = 24743 \ N.$$

Les quatrièmes efforts résistants Eff4 sont dus à des pièces tournantes de l'aéronef autres que les roues.
Les quatrièmes efforts résistants Eff4 sont déterminés en fonction d'au moins un des paramètres suivants : au moins une caractéristique des roulements ou des paliers des pièces tournantes, vitesse vue par les roulements ou les paliers, charge appliquée par les roulements ou les paliers, friction entre les pièces tournantes.
Les quatrièmes efforts résistants Eff4 peuvent être calculés en utilisant la formule suivante :

$$Eff4 = Fpièces \ tournantes = Cf*Vr,$$

où Cf est un coefficient de friction dépendant des paramètres listés ci-dessus et Vr une vitesse de rotation des pièces tournantes.
Ainsi, avec :

Cf = 50 ;
Vr = 20 rad/s ;

on obtient :

$$Eff4 = Fpièces \ tournantes = 1000N.$$

Le bloc de calcul d'effort minimum 14 calcule le seuil d'effort minimum Seuil_min en additionnant les premiers efforts résistants Eff1, les deuxièmes efforts résistants Eff2, les troisièmes efforts résistants Eff3 et les quatrièmes efforts résistants Eff4, et en ajoutant une marge d'effort. La marge d'effort est soit une marge fixe, soit un pourcentage de la somme des efforts résistants.

Ainsi, avec une marge fixe de 150N, on obtient, pour un aéronef en déplacement, un seuil d'effort minimum Seuil_min :

$$\text{Seuil\_min} = 13697 + 112 + 7848 + 1000 + 150 = 22807N.$$

Avec une marge égale à 10% de la somme des efforts résistants, on obtient, pour un aéronef en déplacement, un seuil d'effort minimum Seuil_min :

$$\text{Seuil\_min} = (13697 + 112 + 7848 + 1000)*(1+10\%) = 24923N.$$

La chaîne de traitement 7 comporte de plus un bloc de choix d'effort maximum 15 qui détermine un seuil d'effort maximum Seuil_max égal au maximum entre l'effort d'accélération Eff_a et le seuil d'effort minimum Seuil_min.

Selon la norme utilisée pour le signe des valeurs d'efforts et selon le sens de déplacement de l'aéronef au cours du taxiage, l'effort d'accélération Eff_a et le seuil d'effort minimum Seuil_min peuvent être tous deux positifs ou négatifs. Le bloc de choix d'effort maximum 15 choisit le maximum en valeur absolue entre l'effort d'accélération Eff_a et le seuil d'effort minimum Seuil_min et conserve le signe de l'effort d'accélération Eff_a si celui-ci est choisi ou du seuil d'effort minimum Seuil_min si celui-ci est choisi.

Ainsi, si l'effort d'accélération Eff_a est égal à 15000N et le seuil d'effort minimum Seuil_min à 20000N (ou inversement), le seuil d'effort maximum Seuil_max est égal à 20000N. Si l'effort d'accélération Eff_a est égal à -15000N et le seuil d'effort minimum Seuil_min à -20000N, le seuil d'effort maximum Seuil_max est égal à -20000N.

Le principe de la détermination du seuil d'effort maximum Seuil_max par le bloc de choix d'effort maximum 15 est illustré sur la figure 4. La surface hachurée 16 correspond à un effort qui permet d'améliorer la performance du taxiage en augmentant l'accélération, tout en maintenant un niveau d'effort acceptable pour ne pas contraindre de manière trop importante les pièces mécaniques du système de taxiage et de l'atterrisseur 1.

Le bloc de choix d'effort maximum 15 produit donc un seuil d'effort maximum Seuil_max qui permet d'optimiser la durée de vie des pièces mécaniques du système de taxiage et de l'atterrisseur 1 en réduisant les contraintes et les niveaux de fatigue subis par les pièces mécaniques du système de taxiage d'aéronef et de l'atterrisseur 1. En choisissant le maximum entre l'effort d'accélération Eff_a et le seuil d'effort minimum Seuil_min, on évite cependant de pénaliser les performances du taxiage si cela n'est pas nécessaire au vu des contraintes et des niveaux de fatigue subis par l'atterrisseur 1.

Le procédé de commande du système de taxiage comporte de plus la mise en oeuvre d'un bloc de choix d'effort minimum 17 qui génère une commande d'effort optimisée Comm_opt en choisissant le minimum entre la commande d'effort nominale Comm_nom et le seuil d'effort maximum Seuil_max.

Le choix réalisé par le bloc de choix d'effort minimum 17 est réalisé de manière semblable au choix réalisé par le bloc de choix d'effort maximum 15 - si ce n'est que c'est le minimum en valeur absolue qui est choisi.

Ainsi, si la commande d'effort nominale Comm_nom est égale à 15000N et le seuil d'effort maximum Seuil_max à 20000N (ou inversement), la commande d'effort optimisée Comm_opt est égale à 15000N. Si la commande d'effort nominale Comm_nom est égale à -15000N et le seuil d'effort maximum Seuil_max à -20000N (ou inversement), la commande d'effort optimisée Comm_opt est égale à -15000N.

Le principe de la détermination de la commande d'effort optimisée Comm_opt par le bloc de choix d'effort minimum 17 est illustré sur la figure 5.

La mise en oeuvre du bloc de choix d'effort minimum 17 constitue un dispositif de protection qui permet d'intégrer la chaîne de traitement 7 dans un procédé de commande d'un système de taxiage de l'art antérieur en conservant les conditions de mise en oeuvre et les temps d'échantillonnage de ce procédé de commande d'un système de taxiage de l'art antérieur.

Ainsi, la commande d'effort optimisée Comm_opt ne correspond pas systématiquement au seuil d'effort maximum Seuil_max produit par le bloc de choix d'effort maximum 15 pour optimiser la durée de vie de l'atterrisseur en réduisant les contraintes et les niveaux de fatigue subis. En particulier, lorsque la puissance développée par le moteur électrique est faible (car limitée, ou bien du fait de la commande), l'accélération de l'aéronef est faible et l'optimisation de la durée de vie n'est pas utilisée.

Le procédé de commande du système de taxiage comporte de plus la mise en oeuvre d'un bloc de de gestion d'effort 18 qui transforme la commande d'effort optimisée Comm_opt en une commande d'effort effective Comm_eff qui est utilisée pour piloter le moteur électrique.

Le bloc de gestion d'effort 18 réalise si nécessaire des limitations (saturation, limitation de pente, etc.), des ajustements pour rendre la commande d'effort effective Comm_eff conforme à des normes utilisées (signe, unité, etc.), ou bien la mise en oeuvre d'une commutation entre plusieurs procédé de commande. Bien sûr, il est possible que le bloc de gestion d'effort 18 ne réalise aucune opération, et donc que la commande d'effort optimisée Comm_opt soit égale à la commande d'effort effective Comm_eff.

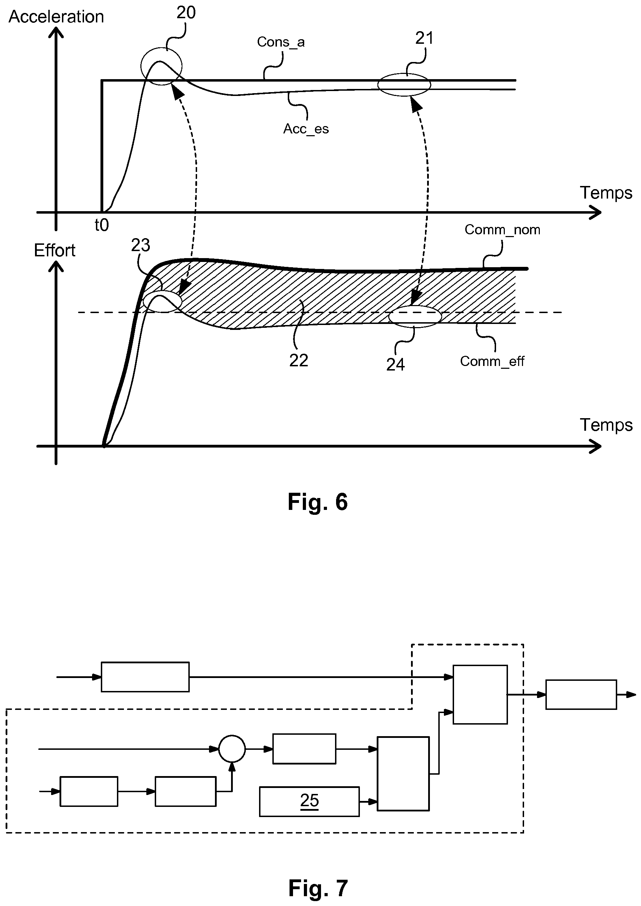

On illustre maintenant la mise en oeuvre du procédé de commande d'un système de taxiage selon le premier mode de réalisation de l'invention en référence à la figure 6.

Lorsque le taxiage de l'aéronef débute au moment t0, la consigne d'accélération Cons_a possède une valeur constante. L'accélération estimée Acc_es présente un overshoot d'accélération 20 et une erreur statique d'accélération 21.

La commande d'effort nominale Comm_nom est relativement importante. Le procédé de commande permet de produire une commande d'effort effective Comme_ff nettement inférieure à la commande d'effort nominale Comm_nom. La surface hachurée 22 représente le gain en terme d'effort qui permet de réduire les contraintes sur les pièces mécaniques du système de taxiage et de l'atterrisseur 1.

On note que l'overshoot d'accélération 20 génère un overshoot d'effort 23 limité et acceptable. L'erreur statique d'effort 24 est elle aussi acceptable. Elle pourrait encore être réduite en jouant sur la consigne d'accélération Cons_a.

Les exigences principales à respecter pour dimensionner le procédé de commande selon le premier mode de réalisation de l'invention sont d'assurer la stabilité de la chaîne de traitement 7 et du procédé dans son ensemble, de limiter autant que possible l'overshoot (et de l'annuler si possible), d'adapter la consigne d'accélération Cons_a et le temps de réponse aux plus faibles performances de taxiage acceptables, et de définir une consigne d'accélération Cons_a qui permette de compenser l'erreur statique.

On note ici que si la consigne d'accélération Cons_a ne peut être atteinte (par exemple parce que la puissance électrique disponible pour le système de taxiage ne permet pas de compenser la masse de l'aéronef ou la pente de la piste), la chaîne de traitement 7 ne modifie pas le comportement du procédé de commande selon le premier mode de réalisation de l'invention. En effet, le procédé de commande autorise dans ce cas la génération d'efforts de plus en plus élevés, jusqu'à ce que la consigne d'accélération Cons_a soit atteinte.

On note de plus que la chaîne de traitement 7 du procédé de commande d'un système de taxiage selon le premier mode de réalisation de l'invention peut être intégrée dans un procédé de commande de l'art antérieur quel que soit l'effort utilisé pour la commande d'effort (couple, vitesse, force, etc.), et ce, sans qu'il ne soit nécessaire de changer les interfaces utilisées par le procédé de commande de l'art antérieur. L'ordre de taxiage produit par le pilote de l'aéronef et les signaux d'entrée restent les mêmes.

En référence à la figure 7, le procédé de commande d'un système de taxiage selon un deuxième mode de réalisation de l'invention est semblable au procédé de commande d'un système de taxiage selon le premier mode de réalisation de l'invention, si ce n'est que le bloc de calcul d'effort minimum 25 du procédé de commande d'un système de taxiage selon le deuxième mode de réalisation de l'invention est différent du bloc de calcul d'effort minimum 14.

Le seuil d'effort minimum Seuil_min produit par le bloc de calcul d'effort minimum 25 est un seuil constant prédéterminé.

Le seuil constant prédéterminé est ici défini par des études et analyses concernant uniquement les pièces mécaniques de l'atterrisseur 1 lui-même (et non les pièces mécanique du système de taxiage). La mise en oeuvre du procédé de commande d'un système de taxiage selon le deuxième mode de réalisation de l'invention nécessite moins de ressources, car le seuil d'effort minimum Seuil_min n'est plus calculé en temps réel, et est optimisé en relation uniquement avec les pièces mécanique de l'atterrisseur et non avec les pièces mécaniques du système de taxiage.

Le seuil d'effort minimum Seuil_min est ici égal à 25000N (ce seuil correspond en l'occurrence à l'ensemble des atterrisseurs principaux). Lorsque l'effort subi par les atterrisseurs 1 est inférieur à 25000N pendant 80% des phases de taxiage (ce qui correspond au pourcentage de l'ensemble des phases de taxiage au cours desquelles le seuil d'effort minimum Seuil_min est utilisé pour définir la commande d'effort effective), la durée de vie de l'atterrisseur est augmentée de 70%.

Bien entendu, l'invention n'est pas limitée aux modes de réalisation décrits mais englobe toute variante entrant dans le champ de l'invention telle que définie par les revendications.

En particulier, les valeurs numériques utilisées dans la description sont fournies uniquement pour illustrer l'invention et peuvent bien sûr être différentes lors de la mise en oeuvre de l'invention.

**Revendications**

**1.** Procédé de commande d'un système de taxiage adapté à déplacer un aéronef au cours du taxiage de l'aéronef, comprenant les étapes de :

- générer une commande d'effort nominale (Comm_nom) ;
- générer une consigne d'accélération (Cons_a) ;
- mettre en oeuvre, parallèlement à la génération de la commande d'effort nominale, une chaîne de traitement (7) destinée à définir un seuil d'effort maximum (Seuil_max) et comprenant une boucle de régulation (Br), la boucle de régulation (Br) ayant pour consigne la consigne d'accélération (Cons_a) et pour commande une commande d'accélération (Comm_a), la commande d'accélération étant convertie en un effort d'accélération (Eff_a) permettant d'obtenir une accélération de l'aéronef au cours du taxiage égale à la commande d'accélération (Comm_a), le seuil d'effort maximum étant égal au maximum entre l'effort d'accélération (Eff_a) et un seuil d'effort minimum (Seuil_min) ;
- générer une commande d'effort optimisée (Comm_opt) égale au minimum entre la commande d'effort nominale et le seuil d'effort maximum.

2. Procédé de commande selon la revendication 1, dans lequel le seuil d'effort minimum est un seuil constant prédéterminé.

3. Procédé de commande selon la revendication 1, dans lequel le seuil d'effort minimum est calculé en temps réel en fonction d'efforts résistants appliqués à l'aéronef au cours du taxiage de l'aéronef.

4. Procédé de commande selon la revendication 3, dans lequel les efforts résistants comportent des efforts parmi des premiers efforts résistants (Eff1) dus à la gravité, des deuxièmes efforts résistants (Eff2) dus à des effets aérodynamiques, des troisièmes efforts résistants (Eff3) dus à des pneumatiques de l'aéronef et à une liaison au sol entre les pneumatiques et une piste sur laquelle roule l'aéronef au cours du taxiage de l'aéronef, des quatrièmes efforts résistants (Eff4) dus à des pièces tournantes de l'aéronef.

5. Procédé de commande selon la revendication 4, dans lequel les premiers efforts résistants (Eff1) sont déterminés en fonction d'au moins un des paramètres suivants : masse de l'aéronef, pente locale ou globale d'une piste sur laquelle roule l'aéronef, au moins une caractéristique géométrique de l'aéronef.

6. Procédé de commande selon la revendication 4, dans lequel les deuxièmes efforts résistants (Eff2) sont déterminés en fonction d'au moins un des paramètres suivants : vitesse de l'aéronef, surface active de trainée, coefficient de trainée, coefficient de portance de l'aéronef, vitesse de l'air environnant, densité de l'air environnant.

7. Procédé de commande selon la revendication 4, dans lequel les troisièmes efforts résistants (Eff3) sont déterminés en fonction d'au moins un des paramètres suivants : au moins une caractéristique des pneumatiques de l'aéronef, charge vue par chaque pneumatique, durée de stationnement de l'aéronef, au moins une caractéristique du sol de la piste.

8. Procédé de commande selon la revendication 4, dans lequel les quatrièmes efforts résistants (Eff4) sont déterminés en fonction d'au moins un des paramètres suivants : au moins une caractéristique de roulements ou de paliers de pièces tournantes de l'aéronef, vitesse vue par les roulements ou les paliers, charge appliquée par les roulements ou les paliers, friction entre les pièces tournantes.

9. Procédé de commande selon l'une des revendications précédentes, dans lequel la boucle de régulation (Br) comporte un régulateur de type proportionnel, intégral, dérivé (13).

**Patentansprüche**

1. Steuerverfahren zum Steuern eines Rollsystems, das dazu geeignet ist, ein Luftfahrzeug während des Rollens des Luftfahrzeugs zu bewegen, umfassend die Schritte:

- Erzeugen eines nominalen Lastbefehls (Comm_nom);
- Erzeugen eines Beschleunigungssollwertes (Cons_a);
- Ausführen, parallel zur Erzeugung des nominalen Lastbefehls, einer Verarbeitungskette (7), die dazu bestimmt ist, einen maximalen Lastschwellwert (Seuil_max) zu definieren, und eine Regelschleife (Br) umfasst, wobei die Regelschleife (Br) als Sollwert den Beschleunigungssollwert (Cons_a) und als Befehl einen Beschleunigungsbefehl (Comm_a) hat, wobei der Beschleunigungsbefehl in eine Beschleunigungslast (Eff_a) umgewandelt wird, die den Erhalt einer Beschleunigung des Luftfahrzeugs während des Rollens ermöglicht, die gleich des Beschleunigungsbefehls (Comm_a) ist, wobei der maximale Lastschwellwert gleich dem Maximum zwischen der Beschleunigungslast (Eff_a) und einem minimalen Lastschwellwert (Seuil_min) ist;
- Erzeugen eines optimierten Lastbefehls (Com_opt), der gleich dem Minimum zwischen dem nominalen Lastbefehl und dem maximalen Lastschwellwert ist.

2. Steuerverfahren nach Anspruch 1, bei dem der minimale Lastschwellwert ein vorgegebener konstanter Schwellwert ist.

3. Steuerverfahren nach Anspruch 1, bei dem der minimale Lastschwellwert in Echtzeit in Abhängigkeit von Widerstandslasten berechnet wird, die auf das Luftfahrzeug während des Rollens des Luftfahrzeugs aufgebracht werden.

4. Steuerverfahren nach Anspruch 3, bei dem die Widerstandslasten Lasten unter ersten Widerstandslasten (Eff1), die auf die Schwerkraft zurückzuführen sind, zweiten Widerstandstasten (Eff2), die auf aerodynamische Wirkungen zurückzuführen sind, dritten Widerstandslasten (Eff3), die auf die Reifen des Luftfahrzeugs und eine Verbindung mit dem Boden zwischen den Reifen und einer Bahn zurückzuführen sind, auf der das Luftfahrzeug während des Rollens des Luftfahrzeugs rollt, vierten Widerstandslasten (Eff4) umfassen, die auf sich drehende Teile des Luftfahrzeugs zurückzuführen sind.

5. Steuerverfahren nach Anspruch 4, bei dem die ersten Widerstandslasten (Eff1) in Abhängigkeit von mindestens einem der folgenden Parameter bestimmt werden: Masse des Luftfahrzeugs, lokales oder globales Gefälle einer Bahn, auf der das Luftfahrzeug rollt, mindestens eine geometrische Eigenschaft des Luftfahrzeugs.

6. Steuerverfahren nach Anspruch 4, bei dem die zweiten Widerstandslasten (Eff2) in Abhängigkeit von mindestens einem der folgenden Parameter bestimmt werden: Geschwindigkeit des Luftfahrzeugs, aktive Luftwiderstandsfläche, Luftwiderstandskoeffizient, Auftriebskoeffizient des Luftfahrzeugs, Geschwindigkeit der Umgebungsluft, Dichte der Umgebungsluft.

7. Steuerverfahren nach Anspruch 4, bei dem die dritten Widerstandslasten (Eff3) in Abhängigkeit von mindestens einem der folgenden Parameter bestimmt werden: mindestens eine Eigenschaft der Reifen des Luftfahrzeugs, Last, die von jedem Reifen erfahren wird, Parkdauer des Luftfahrzeugs, mindestens eine Eigenschaft des Bodens der Bahn.

8. Steuerverfahren nach Anspruch 4, bei dem die vierten Widerstandslasten (Eff4) in Abhängigkeit von mindestens einem der folgenden Parameter bestimmt werden: mindestens eine Eigenschaft der Wälzlager oder anderer Lager der sich drehenden Teile des Luftfahrzeugs, Geschwindigkeit, die von den Wälzlagern oder anderen Lagern erfahren wird, Last, die von den Wälzlagern oder anderen Lagern aufgebracht wird; Reibung zwischen den sich drehenden Teilen.

9. Steuerverfahren nach einem der vorhergehenden Ansprüche, bei dem die Regelschleife (Br) einen Regler der Art Proportional-Integral-Differential-Regler (13) umfasst.

## Claims

1. Method for controlling a taxiing system suitable for moving an aircraft during the taxiing of the aircraft, comprising the steps of :

   - generating a nominal load command (Comm_nom);
   - generating an acceleration setpoint (Cons_a);
   - implementing, in parallel with the generation of the nominal load command, a processing chain (7) intended to define a maximum load threshold (Seuil_max) and comprising a regulation loop (Br), the regulation loop (Br) having for its setpoint the acceleration setpoint (Cons_a) and for its command an acceleration command (Comm_a), the acceleration command being converted into an acceleration load (Eff_a) making it possible to obtain an acceleration of the aircraft during the taxiing equal to the acceleration command (Comm_a), the maximum load threshold being equal to the maximum of the acceleration load (Eff_a) and a minimum load threshold (Seuil_min);

    - generating an optimised load command (Comm_opt) equal to the minimum of the nominal load command and the maximum load threshold.

2. Control method according to Claim 1, in which the minimum load threshold is a predetermined constant threshold.

3. Control method according to Claim 1, in which the minimum load threshold is computed in real time as a function of resisting loads applied to the aircraft during the taxiing of the aircraft.

4. Control method according to Claim 3, in which the resisting loads comprise loads out of the first resisting loads (Eff1) due to gravity, the second resisting loads (Eff2) due to aero dynamic effects, third resisting loads (Eff3) due to the tyres of the aircraft and to a link to the ground between the tyres and a runway on which the aircraft is rolling during the taxiing of the aircraft, fourth resisting loads (Eff4) due to rotating parts of the aircraft.

5. Control method according to Claim 4, in which the first resisting loads (Eff1) are determined as a function of at least one of the following parameters: weight of the aircraft, local or overall slope of a runway on which the aircraft is rolling, at least one geometrical characteristic of the aircraft.

6. Control method according to Claim 4, in which the second resisting loads (Eff2) are determined as a function of at least one of the following parameters: speed of the aircraft, active drag surface, drag coefficient, aircraft lift coefficient, surrounding air speed, surrounding air density.

7. Control method according to Claim 4, in which the third resisting loads (Eff3) are determined as a function of at least one of the following parameters: at least one characteristic of the tyres of the aircraft, load experienced by each tyre, parking time of the aircraft, at least one characteristic of the ground of the runway.

8. Control method according to Claim 4, in which the fourth resisting loads (Eff4) are determined as a function of at least one of the following parameters: at least one characteristic of the rolling and other bearings of rotating parts of the aircraft, speed experienced by the rolling or other bearings, load applied by the rolling or other bearings, friction between the rotating parts.

9. Control method according to one of the preceding claims, in which the regulation loop (Br) comprises a regulator of proportional, integral, derivative (13) type.

1

3

2

4

4

**Fig. 1**

Effort

C3

C2

C1

Temps

**Fig. 2**

**Fig. 3**

**Fig. 4**

**Fig. 5**

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2886454 A
- US 2012018574 A
- US 2015158579 A
- WO 2014076485 A
- US 2015253773 A
- US 2015210383 A
- US 2015225075 A